# EUROPÄISCHE PATENTSCHRIFT

(11) **EP 3 463 939 B1**
(45) Veröffentlichungstag und Bekanntmachung des Hinweises auf die Patenterteilung: **18.03.2020**
(21) Anmeldenummer: 17730400.3
(22) Anmeldetag: 29.05.2017
(51) Int. Cl.: B60G 13/00, B60G 15/06, B62D 17/00

(54) **FEDERBEINLAGER ZUM LAGERN EINES FEDERBEINS AN EINER KRAFTFAHRZEUGKAROSSERIE UND EIN VERFAHREN ZUM EINSTELLEN VON FAHRWERKEN VON KRAFTFAHRZEUGEN**
STRUT BEARING FOR BEARING A STRUT ON A MOTOR VEHICLE BODY AND A METHOD FOR THE CONFIGURATION OF CHASSIS OF MOTOR VEHICLES
PALIER DE JAMBE DE FORCE À RESSORT POUR MONTER UNE JAMBE DE FORCE À RESSORT SUR UNE CARROSSERIE DE VÉHICULE AUTOMOBILE ET UN PROCÉDÉ DE RÉGLAGE DE CHÂSSIS DE VÉHICULES AUTOMOBILES

(30) Priorität: 01.06.2016 DE 102016209590
(43) Veröffentlichungstag der Anmeldung: 10.04.2019
(73) Patentinhaber: ThyssenKrupp Bilstein GmbH, 58256 Ennepetal (DE); thyssenkrupp AG, 45143 Essen (DE)
(72) Erfinder: PRIESS, Jens, 46117 Oberhausen (DE); WIENERS, Daniel, 44803 Bochum (DE); BURDINSKI, Ralf, 44795 Bochum (DE)
(74) Vertreter: thyssenkrupp Intellectual Property GmbH
(86) Internationale Anmeldenummer: PCT/EP2017/062881
(87) Internationale Veröffentlichungsnummer: WO 2017/207482

(56) Entgegenhaltungen:
- DE-A1- 19 636 719
- JP-B2- 5 801 025
- US-A1- 2015 091 268

## Beschreibung

Die vorliegende Erfindung betrifft ein Federbeinlager zum Lagern eines Federbeins an einer Kraftfahrzeugkarosserie und ein Verfahren zum Einstellen von Fahrwerken von Kraftfahrzeugen.

### Stand der Technik

Federbeinlager zum Lagern eines Federbeins an einer Kraftfahrzeugkarosserie sind im Stand der Technik in einer Vielzahl von Ausführungsformen bekannt.

Ein Federbeinlager, insbesondere auch als Domlager bezeichnet, ist ein Teil des Fahrwerks von Kraftfahrzeugen. Es befindet sich oberhalb der Feder am Federbein. Das Federbeinlager verbindet das Federbein, insbesondere umfassend den Schwingungsdämpfer und die Feder, mit der Karosserie eines Fahrzeugs. Zudem sind Federbeinlager ein wichtiges Konstruktionselement der Achsaufhängung und tragen dazu bei, dass ein optimaler Kontakt zwischen Reifen und Straßenoberfläche erfolgt. Des Weiteren steigern Federbeinlager den Komfort, indem sie Abroll- und Straßengeräusche von der Karosserie isolieren. Zudem kann über eine an dem Federbeinlager angeordnete Verstelleinrichtung das Fahrwerk von Kraftfahrzeugen, insbesondere der Radsturz eingestellt werden. Der Winkel zwischen der Radmittelebene und einer Senkrechten auf die Fahrbahn wird als Radsturz bezeichnet. Man unterscheidet den Radsturz bezüglich der Fahrbahn und den Radsturz bezüglich des Fahrzeugs. Im fahrzeugfesten System ist der Radsturz positiv, wenn die Oberseite des Rades nach außen geneigt ist. Bei Personenkraftwagen ist ein leicht negativer Sturz aller Räder allgemein üblich, da er eine höhere maximale Seitenführungskraft in Kurven bewirkt.

Das Dokument US2015/0091268 A1 offenbart sowohl ein Federbeinlager mit den Merkmalen des Oberbegriffs des Anspruchs 1 als auch ein Verfahren zum Einstellen und Verstellen des Radsturzes von Kraftfahrzeugen mit den Merkmalen der Schritte a), b), c) und d) des Anspruchs 6. Darüber hinaus ist aus der DE 20 2005 018 496 U1 ein einstellbares Federbeinlager mit zwei zueinander axial verschiebbaren und ineinander greifenden zylindrischen Platten bekannt.

Problematisch bei den im Stand der Technik bekannten Ausführungsformen ist, dass zum Verstellen des Fahrwerks von Kraftfahrzeugen, insbesondere des Radsturzes das Achsbein ausgebaut und demontiert werden muss. Insbesondere umfasst ein Ausbau das Anheben eines Kraftfahrzeuges bis zu einer Höhe, bei welcher die Räder des Kraftfahrzeuges den Kontakt zum Boden verlieren. Bei einem Ausbau müssen zudem die Räder des Kraftfahrzeuges demontiert werden.

Der vorliegenden Erfindung liegt daher die Aufgabe zugrunde, ein verbessertes Federbeinlager und/oder eine verbessertes Verfahren zum Einstellen von Fahrwerken von Kraftfahrzeugen, bei welchem die zuvor genannten Nachteile vermieden werden. Insbesondere soll es mit diesem verbesserten Federbeinlager und/oder verbesserten Verfahren zum Einstellen von Fahrwerken von Kraftfahrzeugen möglich sein, das Fahrwerk eines Kraftfahrzeugs, insbesondere den Radsturz, einzustellen, ohne das Achsbein auszubauen und oder demontieren zu müssen. Des Weiteren soll eine zeitsparende und feine Verstellung des Radsturzes ermöglicht werden.

### Offenbarung der Erfindung

Diese Aufgabe wird mit einem Federbeinlager nach Anspruch 1 und einem Verfahren zum Einstellen von Fahrwerken von Kraftfahrzeugen, insbesondere zum Einstellen und Verstellen des Radsturzes am Federbein einer Radaufhängung nach Anspruch 8 gelöst.

Das erfindungsgemäße Federbeinlager weist gegenüber konventionellen Federbeinlagern den Vorteil auf, dass es das Einstellen von Fahrwerken, insbesondere des Radsturzes ohne den Ausbau und die Demontage des Achsbeins erfolgen kann. Des Weiteren ermöglicht das erfindungsgemäße Federbeinlager eine einfache und genaue Möglichkeit zum Einstellen von Fahrwerken, insbesondere des Radsturzes. Zudem wird die Einstellung des Radsturzes ermöglicht, ohne die Spur eines Fahrzeugs zu verstellen. Insbesondere kann das Einstellen von Fahrwerken, wie beispielsweise die Einstellung des Radsturzes bei auf dem Boden stehenden Kraftfahrzeugen durchgeführt werden. D.h., dass das Kraftfahrzeug nicht auf einer Höhe angehoben werden muss, bei welcher die Räder des Kraftfahrzeuges den Kontakt zum Boden verlieren.

Das erfindungsgemäße Verfahren zum Einstellen von Fahrwerken von Kraftfahrzeugen weist gegenüber konventionellen Verfahren zum Einstellen von Fahrwerken den Vorteil auf, dass eine Verstellung des Fahrwerks, insbesondere Einstellung des Radsturzes vorgenommen werden kann, ohne das Achsbein ausbauen und demontieren zu müssen. Hierdurch ist eine zeitsparende Einstellung des Radsturzes möglich. Des Weiteren stellt das erfindungsgemäße Verfahren eine einfache und genaue Möglichkeit zum Einstellen von Fahrwerken zur Verfügung. Zudem wird die Einstellung des Radsturzes ermöglicht, ohne die Spur eines Fahrzeugs zu verstellen. Insbesondere kann das Einstellen von Fahrwerken, wie beispielsweise die Einstellung des Radsturzes bei auf dem Boden stehenden Kraftfahrzeugen durchgeführt werden. D.h., dass das Kraftfahrzeug nicht auf eine Höhe angehoben werden muss, bei welcher die Räder des Kraftfahrzeuges den Kontakt zum Boden verlieren.

Das erfindungsgemäße Federbeinlager zum Lagern eines Federbeins an einer Kraftfahrzeugkarosserie und zum Einstellen und Verstellen des Radsturzes am Federbein einer Radaufhängung, umfasst wenigstens ein Befestigungsmittel, wobei mit dem Befestigungsmittel mindestens eine wieder lösbare Klemmverbindung mit dem Federbeinlager und der Kraftfahrzeugkarosserie ausbildbar ist, insbesondere eine Schraubverbindung ist, eine Federbeinaufnahme und eine Verstelleinrichtung, wobei die Verstelleinrichtung mindestens einen Nutenstein mit mindestens einem Führungselement, eine Lagerplatte mit mindestens einer Führungselementaufnahme ausbildend eine Linearführung des mindestens einen Nutensteins mit dem mindestens einen Führungselement zusammen mit der mindestens einen Führungselementaufnahme umfasst, wobei die Verstelleinrichtung zusätzlich eine Klemmplatte aufweist, wobei die Lagerplatte, der mindestens eine Nutenstein und die Klemmplatte derart zueinander angeordnet sind, dass der mindestens eine Nutenstein zwischen der Lagerplatte und der Klemmplatte zumindest klemmend fixiert werden kann und wobei die Federbeinaufnahme an dem mindestens einem Nutenstein derart angeordnet ist, dass die Position des mindestens einen Nutensteins in der Linearführung mit der Stellung des Radsturzes am Federbein korreliert.

Ein weiterer Gegenstand der Erfindung ist ein Verfahren zum Einstellen und Verstellen des Radsturzes von Kraftfahrzeugen am umfassend die folgenden Schritte:
a) Bereitstellen eines Federbeins mit einem auf der dem Rad abgewandten Seite angeordneten Federbeinende,
b) Bereitstellen eines Federbeinlagers umfassend eine Federbeinaufnahme zur Aufnahme des Federbeinendes des in Schritt a) bereitgestellten Federbeins, eine Verstelleinrichtung umfassend mindestens einem Nutenstein mit mindestens einem Führungselement, eine Lagerplatte mit mindestens einer Führungselementaufnahme ausbildend eine Linearführung des mindestens einen Nutensteins mit dem mindestens einen Führungselement zusammen mit der mindestens einen Führungselementaufnahme, wobei die Verstelleinrichtung zusätzlich eine Klemmplatte aufweist, wobei die Lagerplatte, der mindestens eine Nutenstein und die Klemmplatte derart zueinander angeordnet sind, dass der mindestens eine Nutenstein zwischen der Lagerplatte und der Klemmplatte zumindest klemmend fixiert werden kann und wobei die Federbeinaufnahme an dem mindestens einem Nutenstein angeordnet ist und das Federbeinlager wenigstens ein Befestigungsmittel aufweist, wobei mit dem Befestigungsmittel mindestens eine wieder lösbare Klemmverbindung mit dem Federbeinlager und der Fahrzeugkarosserie ausgebildet ist, insbesondere eine Schraubverbindung ist, wobei die Klemmverbindung zusätzlich zwischen dem Federbeinlager und der Verstelleinrichtung ausgebildet ist, wobei die Klemmverbindung die Position des mindestens einen Nutensteins zumindest klemmend fixiert,
c) Teilweises Lösen des wenigstens einen Befestigungsmittels des in Schritt b) bereitgestellten Federbeinlagers, wobei die zumindest eine Klemmverbindung teilweise gelöst wird und das in Schritt b) bereitgestellte Federbeinlager mit der Fahrzeugkarosserie verbunden bleibt, wobei der mindestens eine Nutenstein des in Schritt b) bereitgestellten Federbeinlagers in der Verstelleinrichtung des in Schritt b) bereitgestellten Federbeinlagers verschiebbar ist,
d) Verschieben des aus Schritt c) verschiebbaren mindestens einen Nutensteins in der Verstelleinrichtung in Querrichtung zu der Fahrzeuglängsachse zum Einstellen und/oder Verstellen des Radsturzes, bei aus dem Schritt c) teilweise gelöster Klemmverbindung,
e) Anziehen des aus Schritt c) teilweise gelösten wenigstens einen Befestigungsmittels, wobei die teilweise gelöste Klemmverbindung aus Schritt d) wenigstens teilweise wiederhergestellt wird, wobei der in Schritt d) in der Verstelleinrichtung verschobene mindestens eine Nutenstein zumindest klemmend fixiert wird.

### Detaillierte Beschreibung der Erfindung

Im Rahmen der vorliegenden Erfindung wird unter Einstellen das Einstellen des Radsturzes eines Kraftfahrzeugs nach den vom Kraftfahrzeughersteller empfohlenen Angaben, insbesondere bei Serienfahrzeugen, verstanden. Unter Verstellen des Radsturzes wird im Rahmen der vorliegenden Erfindung das Einstellen des Radsturzes eines Kraftfahrzeugs in einem Bereich, welcher über die vom Kraftfahrzeughersteller empfohlenen Angaben hinaus geht, wie beispielsweise Radsturzeinstellungen im Rennsportbereich, Rallyebereich, Stuntbereich oder Kombinationen hiervon.

Unter Befestigungsmittel werden im Rahmen der vorliegenden Erfindung Mittel verstanden, welcher wieder lösbare Klemmverbindungen ausbilden können. Beispiele für erfindungsgemäße Befestigungsmittel sind Schraube-Mutter-Verbindungen, Gewindezapfen Mutter-Verbindungen, Gewindebolzen-Mutter-Verbindungen, Schnellspanner-Verbindungen, Bolzen-Sicherungsklammer-Verbindungen oder Kombinationen hiervon. Insbesondere können für nachfolgend angeführte Schraubverbindungen folgende Anzugsmomente angegeben werden: M8 = 13 Nm, M10 = 25 Nm, M12 = 45 Nm, M14 = 72 Nm, M16 = 110 Nm.

Im Rahmen der vorliegenden Erfindung wird unter einem Führungselement, ein an einem Nutenstein angeordnetes Element verstanden, welches zusammen mit einer Führungselementaufnahme eine lineare Führung des Nutensteins ermöglicht. Beispiele für Führungselemente sind eine Kante, eine Feder, ein Schlitten, ein Draht, ein Steg oder Kombinationen hiervon.

Unter Führungselementaufnahme wird im Rahmen der vorliegenden Erfindung einer Elementaufnahme zur Aufnahme eines Führungselements erstanden, welche zusammen mit dem Führungselement eine lineare Führung des Nutensteins ermöglicht. Beispiele für Führungselementaufnahmen sind eine Gegenkante, eine Nut, eine Ausnehmung, ein Rahmen, eine Schiene, ein Steg, eine Rolle oder Kombinationen hiervon.

Im Rahmen der vorliegenden Erfindung wird unter einer Linearführung eine geradlinige Führung des Führungselements eines Nutensteins mit der Führungselementaufnahme einer Lagerplatte verstanden. Insbesondere korreliert die Richtung der Linearführung mit der Querrichtung zu der Fahrzeuglängsachse.

In einer besonders bevorzugten Ausführungsform der Erfindung fixiert das wenigstens eine Befestigungsmittel, welches mindestens eine wieder lösbare Klemmverbindung mit dem Federbeinlager und der Kraftfahrzeugkarosserie ausbildet auch den mindestens einen Nutenstein zwischen der Lagerplatte und der Klemmplatte zumindest klemmend. Beispielsweise besteht damit die Möglichkeit, dass durch teilweises Lösen des wenigstens einen Befestigungsmittels die zumindest eine Klemmverbindung insbesondere zwischen der Lagerplatte, dem mindestens einen Nutenstein und der Klemmplatte teilweise gelöst wird und das Federbeinlager mit der Fahrzeugkarosserie verbunden bleibt, wobei der mindestens eine Nutenstein des Federbeinlagers in der Verstelleinrichtung des Federbeinlagers verschiebbar ist. Insbesondere erfolgt mit der vorgenannten Anordnung und der Fixierung des wenigstens einen Befestigungsmittels zum einen die Klemmverbindung zwischen Federbeinlager und Kraftfahrzeugkarosserie und zum anderen die Klemmverbindung zwischen der Lagerplatte, dem mindestens einen Nutenstein und der Klemmplatte.

In einer bevorzugten Ausführungsform der Erfindung umfasst das das Federbeinlager wenigstens zwei, vorzugsweise drei Befestigungsmittel.

In einer bevorzugten Ausführungsform der Erfindung ist die Verstelleinrichtung auf der der Kraftfahrzeugkarosserie zugewandten oder abgewandten Seite angeordnet, wobei die Federbeinaufnahme sich gegen das Federbeinlager, insbesondere die Verstelleinrichtung abstützt.

Im Rahmen der vorliegenden Erfindung wird unter der Anordnung der Verstelleinrichtung auf der der Kraftfahrzeugkarosserie zugewandten Seite verstanden, dass die Kraftfahrzeugkarosserie auf der Seite in der Reihenfolge nach der Klemmplatte des Federbeinlagers angeordnet ist. Hingegen wird im Rahmen der vorliegenden Erfindung unter der Anordnung der Verstelleinrichtung auf der der Kraftfahrzeugkarosserie abgewandten Seite verstanden, dass die Kraftfahrzeugkarosserie auf der Seite in der Reihenfolge nach der Lagerplatte des Federbeinlagers angeordnet ist.

Erfindungsgemäß ist die Führungselementaufnahme ein Führungsrahmen, wobei der mindestens eine Nutenstein innerhalb des Führungsrahmens angeordnet ist.

Erfindungsgemäß weisen die Lagerplatte oder die Klemmplatte und der mindestens eine Nutenstein zumindest formschlüssig miteinander paarbare Einfachverzahnungen und/oder Mehrfachverzahnungen auf, wobei die miteinander gepaarten Einfachverzahnungen und/oder Mehrfachverzahnungen eine zumindest formschlüssige Verbindung in Querrichtung zu der Fahrzeuglängsachse ausbilden.

In einer weiteren Ausführungsform der Erfindung sind die Einfachverzahnungen und/oder Mehrfachverzahnungen aus jeweils mindestens einem Zahnmodul ausgebildet. Insbesondere können durch die modulweise Ausbildung ein oder mehrere Einfachverzahnungsmodule mit ein oder mehreren Einfachverzahnungsmodule gepaart werden und/oder ein oder mehrere Mehrfachverzahnungsmodule mit ein oder mehreren Mehrfachverzahnungsmodulen gepaart werden.

Nach einer weiteren Ausführungsform der Erfindung ist die Einfachverzahnungen und/oder Mehrfachverzahnungen zumindest teilweise als eine Schrägverzahnung ausgebildet.

Gemäß einer weiteren Ausführungsform der Erfindung weist die Klemmplatte mindestens eine Verstellskala auf, wobei die Verstellskala derart angeordnet ist, dass die Verstellskala mit der Position, in welcher die Federbeinaufnahme in Querrichtung zu der Fahrzeuglängsachse angeordnet ist, korreliert, insbesondere mit dem Radsturz korreliert.

Im Rahmen der vorliegenden Erfindung wird unter einer Verstellskala eine Anzeigeeinrichtung zum Ablesen eines Wertes, welcher mit dem Radsturz korreliert, insbesondere eines Radsturzwertes, verstanden.

In einer üblichen Ausführungsform der Erfindung ist die Klemmplatte auf der der Kraftfahrzeugkarosserie zugewandten Seite des Federbeinlagers angeordnet und die Lagerplatte auf der der Kraftfahrzeugkarosserie abgewandten Seite des Federbeinlagers angeordnet.

Gemäß einer weiteren Ausführungsform der Erfindung ist die Klemmplatte auf der der Kraftfahrzeugkarosserie abgewandten Seite des Federbeinlagers angeordnet und die Lagerplatte auf der der Kraftfahrzeugkarosserie zugewandten Seite des Federbeinlagers angeordnet. Vorteilhaft ist bei dieser Ausführungsform, das leichtere Einstellen von Fahrwerken, wie beispielsweise die Einstellung des Radsturzes, da das Gewicht des Kraftfahrzeuges nicht auf dem Federbeinlager lastet, sowie einer verbesserte Klemmwirkung im Fahrbetrieb, da das Gewicht des Kraftfahrzeuges gegen die Lagerplatte wirkt und die Klemmkraft erhöht. Bei dieser Ausführungsform muss zum Einstellen des Fahrwerks, wie beispielsweise die Einstellung des Radsturzes, das Kraftfahrzeug auf eine Höhe angehoben werden, bei welcher die Räder des Kraftfahrzeuges den Boden nicht mehr berühren, wobei die Räder des Kraftfahrzeuges nicht demontiert werden müssen.

Erfindungsgemäß weisen die Lagerplatte oder die Klemmplatte und der mindestens eine Nutenstein des in Schritt b) bereitgestellten Federbeinlagers zusätzlich zumindest formschlüssig miteinander paarbare Einfachverzahnungen und/oder Mehrfachverzahnungen auf, wobei nach dem Verschieben in Schritt d) in einem weiteren Schritt d1) eine Verzahnung erfolgt, wobei zusätzlich eine zumindest formschlüssige Verbindung in Querrichtung zu der Fahrzeuglängsachse ausgebildet wird.

### Kurze Beschreibung der Zeichnungen

Das erfindungsgemäße Federbeinlager und das erfindungsgemäße Verfahren zum Einstellen von Fahrwerken von Kraftfahrzeugen, insbesondere zum Einstellen und Verstellen des Radsturzes am Federbein einer Radaufhängung werden anhand der Zeichnungen erläutert.
- Fig. 1: zeigt in einer Explosionsdarstellung schematisch eine Schrägaufsicht durch ein Federbeinlager gemäß einer Ausführungsform der Erfindung,
- Fig. 2: zeigt schematisch einen Längsschnitt durch ein Federbeinlager nach Fig. 1 mit Anordnungsbeispielen an einer Kraftfahrzeugkarosserie gemäß einer Ausführungsform der Erfindung.

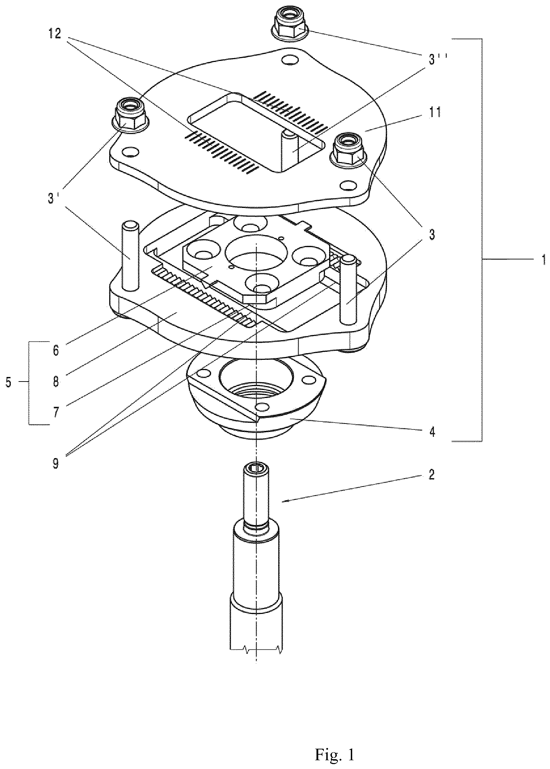

In der Fig. 1 ist eine Schrägaufsicht durch ein Federbeinlager 1 gemäß einer Ausführungsform der Erfindung dargestellt. Das Federbeinlager 1 zeigt ein Federbein 2, eine Federbeinaufnahme 4 und eine Verstelleinrichtung 5. Die Verstelleinrichtung 5 umfasst einer Lagerplatte 8, einer Klemmplatte 11 und einen Nutenstein 6, wobei der Nutenstein 6 zwischen der Lagerplatte 8 und der Klemmplatte 11 angeordnet ist. Der Nutenstein 6 umfasst ein Führungselement 7 und die Lagerplatte 8 umfasst eine Führungselementaufnahme 9. Das Führungselement 7 bildet mit der Führungselementaufnahme 9 eine Linearführung des Nutensteins 6 aus. Das Federbeinlager 1 ist mit Befestigungsmitteln 3, 3', 3" an einer nicht dargestellten Kraftfahrzeugkarosserie 10, 10' derart angeordnet, dass die Linearführung des Nutensteins 6 in Querrichtung zu der Fahrzeuglängsachse verläuft. Die Befestigungsmittel 3, 3', 3" verlaufen von der Lagerplatte 8 durch die Klemmplatte 11 und die nicht dargestellte Kraftfahrzeugkarosserie 10, 10'. Mit den Befestigungsmitteln 3, 3', 3" kann der Nutenstein 6 zwischen der Lagerplatte 8 und der Klemmplatte 11 klemmend fixiert werden. Die Führungselementaufnahme 9 ist als ein Führungsrahmen ausgebildet, wobei die Führungselementaufnahme 9 eine Einfachverzahnung aufweist und der Nutenstein 6 innerhalb des Führungsrahmens angeordnet ist. Der Nutenstein 6 zeigt eine mit der Einfachverzahnung der Führungselementaufnahme 9 paarbare Einfachverzahnung auf. Die Federbeinaufnahme 4 ist an dem Nutenstein 6 derart angeordnet, dass die Position des Nutensteins 6 in der Linearführung mit der Stellung des Radsturzes am Federbein korreliert. An der Klemmplatte 11 ist eine Verstellskala 12 derart angeordnet ist, dass die Verstellskala 12 mit der Position, in welcher die Federbeinaufnahme 4 in Querrichtung zu der Fahrzeuglängsachse angeordneten ist, korreliert, insbesondere mit dem Radsturz korreliert.

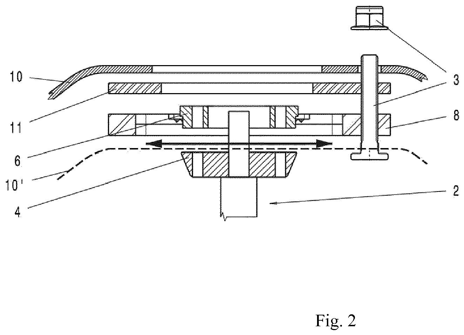

In der Fig. 2 ist schematisch ein Längsschnitt durch das Federbeinlager 1 nach Fig. 1 mit Anordnungsbeispielen an der Kraftfahrzeugkarosserie 10, 10' gemäß einer Ausführungsform der Erfindung dargestellt. Beispielhaft ist die Kraftfahrzeugkarosserie 10 an der Klemmplatte 11 angeordnet oder an der Lagerplatte 8. Der Doppelpfeil zeigt die mögliche Verschiebungsrichtung des Nutensteins 6 mit der Federbeinaufnahme 4 in Querrichtung zu der Fahrzeuglängsachse. Die mögliche Verschiebungsrichtung ist umgesetzt durch eine Beabstandung der dem Nutenstein 6 zugewandten Seite der Federbeinaufnahme 4 zu der der Federbeinaufnahme 4 zugewandten Seite des Nutensteins 6, was durch einen Abstand, insbesondere ein Spiel zwischen dem Nutenstein 6 zu der Federbeinaufnahme 4 dargestellt ist. Beispielsweise wird der Abstand durch Befestigungselemente mit welchen die dargestellten sich jeweils gegenüber liegenden Öffnungen des Nutensteins 6 und der Federbeinaufnahme 4 verbunden werden, eingestellt auf ein gewünschtes Abstandsmaß. Für die Funktion der Verstellung ist gut ersichtlich, dass in einem verbundenen und beabstandeten Zustand des Nutensteins 6 zu der Federbeinaufnahme 4 die mit dem Doppelpfeil dargestellte mögliche Verschiebungsrichtung des Nutensteins 6 mit der Federbeinaufnahme 4 zu der Lagerplatte 8, insbesondere in Querrichtung zu der Fahrzeuglängsachse möglich ist, solange der Nutenstein 6 nicht zwischen der Lagerplatte 8 und der Klemmplatte 11 fixiert ist. Eine Fixierung kann durch die dargestellte Verzahnung des Nutensteins 6 mit einer gepaarten Verzahnung der Lagerplatte und/oder einer Klemmverbindung, welche durch Verspannung des Nutensteins 6 zwischen der Lagerplatte 8 und der Klemmplatte 11 mittels der Befestigungsmittel 3, 3', 3" erfolgen kann. Auch bei der Fixierung ist die dem Nutenstein 6 zugewandten Seite der Federbeinaufnahme 4 zu der der Federbeinaufnahme 4 zugewandten Seite des Nutensteins 6 beabstandet.

### Gewerbliche Anwendbarkeit

Federbeinlager und Verfahren zum Einstellen von Fahrwerken von Kraftfahrzeugen, insbesondere zum Einstellen und Verstellen des Radsturzes am Federbein einer Radaufhängung der vorbeschriebenen Art für Fahrzeuge werden in der Produktion und/oder Wartung von Fahrzeugen, insbesondere von Fahrwerken von Kraftfahrzeuge eingesetzt.

### Bezugszeichenliste

- 1: = Federbeinlager
- 2: = Federbein
- 3, 3', 3": = Befestigungsmittel
- 4: = Federbeinaufnahme
- 5: = Verstelleinrichtung
- 6: = Nutenstein
- 7: = Führungselement
- 8: = Lagerplatte
- 9: = Führungselementaufnahme
- 10, 10': = Kraftfahrzeugkarosserie
- 11: = Klemmplatte
- 12: = Verstellskala

## Patentansprüche

1. Federbeinlager (1) zum Lagern eines Federbeins (2) an einer Kraftfahrzeugkarosserie (10, 10') und zum Einstellen und Verstellen des Radsturzes am Federbein (2) einer Radaufhängung, das Federbeinlager (1) umfassend wenigstens ein Befestigungsmittel (3, 3', 3"), wobei mit dem Befestigungsmittel (3, 3', 3") mindestens eine wieder lösbare Klemmverbindung mit dem Federbeinlager (1) und der Kraftfahrzeugkarosserie (10, 10') ausbildbar ist, insbesondere eine Schraubverbindung ist, eine Federbeinaufnahme (4) und eine Verstelleinrichtung (5), wobei die Verstelleinrichtung (5) mindestens einen Nutenstein (6) mit mindestens einem Führungselement (7), eine Lagerplatte (8) mit mindestens einer Führungselementaufnahme (9) ausbildend eine Linearführung des mindestens einen Nutensteins (6) mit dem mindestens einen Führungselement (7) zusammen mit der mindestens einen Führungselementaufnahme (9) umfasst, wobei die Verstelleinrichtung (5) zusätzlich eine Klemmplatte (11) aufweist, wobei die Lagerplatte (8), der mindestens eine Nutenstein (6) und die Klemmplatte (11) derart zueinander angeordnet sind, dass der mindestens eine Nutenstein (6) zwischen der Lagerplatte (8) und der Klemmplatte (11) zumindest klemmend fixiert werden kann und wobei die Federbeinaufnahme (4) an dem mindestens einem Nutenstein (6) derart angeordnet ist, dass die Position des mindestens einen Nutensteins (6) in der Linearführung mit der Stellung des Radsturzes am Federbein korreliert, **dadurch gekennzeichnet, dass** die Führungselementaufnahme (9) ein Führungsrahmen ist, wobei der mindestens eine Nutenstein (6) innerhalb des Führungsrahmens angeordnet ist und wobei die Lagerplatte (8) oder die Klemmplatte (11) und der mindestens eine Nutenstein (6) zumindest formschlüssig miteinander paarbare Einfachverzahnungen und/oder Mehrfachverzahnungen aufweisen, wobei die miteinander gepaarten Einfachverzahnungen und/oder Mehrfachverzahnungen eine zumindest formschlüssige Verbindung in Querrichtung zu der Fahrzeuglängsachse ausbilden kann.

2. Federbeinlager (1) nach Anspruch 1, **dadurch gekennzeichnet, dass** die Verstelleinrichtung (5) auf der der Kraftfahrzeugkarosserie (10, 10') zugewandten oder abgewandten Seite angeordnet ist, wobei die Federbeinaufnahme (4) sich gegen das Federbeinlager (1), insbesondere die Verstelleinrichtung (5) abstützt.

3. Federbeinlager (1) nach Anspruch 1 oder 2, **dadurch gekennzeichnet, dass** die Einfachverzahnungen und/oder Mehrfachverzahnungen aus jeweils mindestens einem Zahnmodul ausgebildet sind.

4. Federbeinlager (1) nach einem der vorhergehenden Ansprüche, **dadurch gekennzeichnet, dass** die Einfachverzahnungen und/oder Mehrfachverzahnungen zumindest teilweise als eine Schrägverzahnung ausgebildet ist.

5. Federbeinlager (1) nach einem der vorhergehenden Ansprüche, **dadurch gekennzeichnet, dass** die Klemmplatte (11) mindestens eine Verstellskala (12) aufweist, wobei die Verstellskala (12) derart angeordnet ist, dass die Verstellskala (12) mit der Position, in welcher die Federbeinaufnahme (4) in Querrichtung zu der Fahrzeuglängsachse angeordnet ist, korreliert, insbesondere mit dem Radsturz korreliert.

6. Verfahren zum Einstellen und Verstellen des Radsturzes von Kraftfahrzeugen am umfassend die folgenden Schritte:
a) Bereitstellen eines Federbeins (2) mit einem auf der dem Rad abgewandten Seite angeordneten Federbeinende,
b) Bereitstellen eines Federbeinlagers (1) umfassend eine Federbeinaufnahme (4) zur Aufnahme des Federbeinendes des in Schritt a) bereitgestellten Federbeins (2), eine Verstelleinrichtung (5) umfassend mindestens einem Nutenstein (6) mit mindestens einem Führungselement (7), eine Lagerplatte (8) mit mindestens einer Führungselementaufnahme (9) ausbildend eine Linearführung des mindestens einen Nutensteins (6) mit dem mindestens einen Führungselement (7) zusammen mit der mindestens einen Führungselementaufnahme (9), wobei die Verstelleinrichtung (5) zusätzlich eine Klemmplatte (11) aufweist, wobei die Lagerplatte (8), der mindestens eine Nutenstein (6) und die Klemmplatte (11) derart zueinander angeordnet sind, dass der mindestens eine Nutenstein (6) zwischen der Lagerplatte (8) und der Klemmplatte (11) zumindest klemmend fixiert werden kann und wobei die Federbeinaufnahme (4) an dem mindestens einem Nutenstein (6) angeordnet ist und das Federbeinlager (1) wenigstens ein Befestigungsmittel (3, 3', 3") aufweist, wobei mit dem Befestigungsmittel (3, 3', 3") mindestens eine wieder lösbare Klemmverbindung mit dem Federbeinlager (1) und der Fahrzeugkarosserie (10, 10') ausgebildet ist, insbesondere eine Schraubverbindung ist, wobei die Klemmverbindung zusätzlich zwischen dem Federbeinlager (1) und der Verstelleinrichtung (5) ausgebildet ist, wobei die Klemmverbindung die Position des mindestens einen Nutensteins (6) zumindest klemmend fixiert, wobei die Führungselementaufnahme (9) des bereitgestellten Federbeinlagers (1) in einem weiteren Schritt b1) als ein Führungsrahmen ausgebildet ist, wobei der Nutenstein (6) innerhalb des Führungsrahmens angeordnet wird,
c) Teilweises Lösen des wenigstens einen Befestigungsmittels (3, 3', 3") des in Schritt b) bereitgestellten Federbeinlagers (1), wobei die zumindest eine Klemmverbindung teilweise gelöst wird und das in Schritt b) bereitgestellte Federbeinlager (1) mit der Fahrzeugkarosserie (10, 10') verbunden bleibt, wobei der mindestens eine Nutenstein (6) des in Schritt b) bereitgestellten Federbeinlagers (1) in der Verstelleinrichtung (5) des in Schritt b) bereitgestellten Federbeinlagers (1) verschiebbar ist,
d) Verschieben des aus Schritt c) verschiebbaren mindestens einen Nutensteins (6) in der Verstelleinrichtung (5) in Querrichtung zu der Fahrzeuglängsachse zum Einstellen und/oder Verstellen des Radsturzes, bei aus dem Schritt c) teilweise gelöster Klemmverbindung,
e) Anziehen des aus Schritt c) teilweise gelösten wenigstens einen Befestigungsmittels (3, 3', 3"), wobei die teilweise gelöste Klemmverbindung aus Schritt d) wenigstens teilweise wiederhergestellt wird, wobei der in Schritt d) in der Verstelleinrichtung (5) verschobene mindestens eine Nutenstein (6) zumindest klemmend fixiert wird, wobei die Lagerplatte (8) oder die Klemmplatte (11) und der mindestens eine Nutenstein (6) des in Schritt b) bereitgestellten Federbeinlagers (1) zusätzlich zumindest formschlüssig miteinander paarbare Einfachverzahnungen und/oder Mehrfachverzahnungen aufweisen, wobei nach dem Verschieben in Schritt d) in einem weiteren Schritt d1) eine Verzahnung erfolgt, wobei zusätzlich eine zumindest formschlüssige Verbindung in Querrichtung zu der Fahrzeuglängsachse ausgebildet wird.

## Claims

1. Strut bearing (1) for bearing a strut (2) on a motor vehicle body (10, 10') and for setting and adjusting the camber at the strut (2) of a wheel suspension, the strut bearing (1) comprising at least one fixing means (3, 3', 3"), wherein by means of the fixing means (3, 3', 3"), at least one releasable clamping connection, in particular a screw connection, can be formed with the strut bearing (1) and the vehicle body (10, 10'), also a strut receiver (4) and an adjustment device (5),
wherein
the adjustment device (5) comprises at least one sliding block (6) with at least one guide element (7), a bearing plate (8) with at least one guide element receiver (9) forming a linear guide of the at least one sliding block (6) with the at least one guide element (7) together with the at least one guide element receiver (9), wherein the adjustment device (5) also has a clamping plate (11), wherein the bearing plate (8), the at least one sliding block (6) and the clamping plate (11) are arranged relative to each other such that the at least one sliding block (6) can be fixed at least by clamping between the bearing plate (8) and the clamping plate (11), and wherein the strut receiver (4) is arranged on the at least one sliding block (6) such that the position of the at least one sliding block (6) in the linear guide correlates with the setting of the camber at the strut **characterized in that** the guide element receiver (9) is a guide frame, wherein the at least one sliding block (6) is arranged inside the guide frame and wherein the bearing plate (8) or the clamping plate (11) and the at least one sliding block (6) comprise single and/or multiple toothings which can be paired together at least by form fit, wherein the mutually paired single toothings and/or multiple toothings can form an at least form-fit connection in the transverse direction to the vehicle longitudinal axis.

2. Strut bearing (1) according to Claim 1, **characterized in that** the adjustment device (5) is arranged on the side facing or on the side facing away from the vehicle body (10, 10'), wherein the strut receiver (4) rests against the strut bearing (1), in particular the adjustment device (5).

3. Strut bearing (1) according to Claim 1 or 2, **characterized in that** the single and/or multiple toothings are each formed from at least one tooth module.

4. Strut bearing (1) according to any of the preceding claims, **characterized in that** the single and/or multiple toothings are formed at least partially as helical gearing.

5. Strut bearing (1) according to any of the preceding claims, **characterized in that** the clamping plate (11) has at least one adjustment scale (12), wherein the adjustment scale (12) is arranged such that the adjustment scale (12) correlates with the position in which the strut receiver (4) is arranged in the transverse direction to the vehicle longitudinal axis, in particular correlates with the camber.

6. Method for setting and adjusting the camber of motor vehicles, comprising the following steps:
a) provision of a strut (2) with a strut end arranged on the side facing away from the wheel,
b) provision of a strut bearing (1) comprising a strut receiver (4) for receiving the strut end of the strut (2) provided in step a), an adjustment device (5) comprising at least one sliding block (6) with at least one guide element (7), a bearing plate (8) with at least one guide element receiver (9) forming a linear guide of the at least one sliding block (6) with the at least one guide element (7) together with the at least one guide element receiver (9), wherein the adjustment device (5) also comprises a clamping plate (11), wherein the bearing plate (8), the at least one sliding block (6) and the clamping plate (11) are arranged relative to each other such that the at least one sliding block (6) can be fixed at least by clamping between the bearing plate (8) and the clamping plate (11), and wherein the strut receiver (4) is arranged on the at least one sliding block (6) and the strut bearing (1) has at least one fixing means (3, 3', 3"), wherein by means of the fixing means (3, 3', 3"), at least one releasable clamping connection, in particular a screw connection, is formed with the strut bearing (1) and the vehicle body (10, 10'), wherein the clamping connection is additionally formed between the strut bearing (1) and the adjustment device (5), wherein the clamping connection fixes the position of the at least one sliding block (6) at least by clamping, wherein the guide element receiver (9) of the provided strut bearing (1) is formed as a guide frame in a further step b1), wherein the sliding block (6) is arranged inside the guide frame,
c) partial release of the at least one fixing means (3, 3', 3") of the strut bearing (1) provided in step b), wherein the at least one clamping connection is partially released and the strut bearing (1) provided in step b) remains connected to the vehicle body (10, 10'), wherein the at least one sliding block (6) of the strut bearing (1) provided in step b) is displaceable in the adjustment device (5) of the strut bearing (1) provided in step b),
d) displacement of the at least one displaceable sliding block (6) from step c) in the adjustment device (5), in the transverse direction to the vehicle longitudinal axis, for setting and/or adjusting the camber, with the clamping connection being partially released from step c),
e) tightening of the partially released at least one fixing means (3, 3', 3") from step c), wherein the partially released clamping connection from step d) is at least partially recreated, wherein the at least one sliding block (6) displaced in the adjustment device (5) in step d) is fixed at least by clamping, wherein the bearing plate (8) or the clamping plate (11) and the at least one sliding block (6) of the strut bearing (1) provided in step b) also comprise single and/or multiple toothings which can be paired together at least by form fit, wherein after the displacement in step d), an engagement takes place in a further step d1), wherein additionally an at least form-fit connection is created in the transverse direction to the vehicle longitudinal axis.

## Revendications

1. Palier de jambe de suspension (1) destiné à monter une jambe de suspension (2) sur une carrosserie de véhicule automobile (10, 10') et régler et ajuster le carrossage au niveau de la jambe de suspension (2) d'une suspension de roue, le palier de jambe de suspension (1) comprenant au moins un moyen de fixation (3, 3', 3''), le moyen de fixation (3, 3, 3'') permettant de former au moins une liaison par serrage amovible avec le palier de jambe de suspension (1) et la carrosserie de véhicule automobile (10, 10'), en particulier une liaison par vissage, un logement de jambe de suspension (4) et un dispositif d'ajustement (5),
le dispositif d'ajustement (5) comprenant au moins un coulisseau (6) pourvu d'au moins un élément de guidage (7), une plaque d'appui (8) pourvue d'au moins un logement d'élément de guidage (9) formant un guidage linéaire de l'au moins un coulisseau (6) pourvu de l'au moins un élément de guidage (7) conjointement avec l'au moins un logement d'élément de guidage (9), le dispositif d'ajustement (5) comportant en outre une plaque de serrage (11), la plaque d'appui (8), l'au moins un coulisseau (6) et la plaque de serrage (11) étant disposés les uns par rapport aux autres de telle sorte que l'au moins un coulisseau (6) puisse être fixé au moins par serrage entre la plaque d'appui (8) et la plaque de serrage (11) et le logement de jambe de suspension (4) étant disposé au niveau de l'au moins un coulisseau (6) de telle sorte que la position de l'au moins un coulisseau (6) dans le guide linéaire soit en corrélation avec la position du carrossage de la roue au niveau de la jambe de suspension, **caractérisé en ce que** le logement d'élément de guidage (9) est un cadre de guidage, l'au moins un coulisseau (6) étant disposé à l'intérieur du cadre de guidage et la plaque d'appui (8) ou la plaque de serrage (11) et l'au moins un coulisseau (6) comportant des dentures simples et/ou des dentures multiples qui peuvent être appariées au moins par complémentarité de formes, les dentures simples et/ou les dentures multiples appariées pouvant former une liaison au moins par complémentarité de formes dans la direction transversale à l'axe longitudinal du véhicule.

2. Palier de jambe de suspension (1) selon la revendication 1, **caractérisé en ce que** le dispositif d'ajustement (5) est disposé du côté dirigé vers la carrosserie de véhicule automobile (10, 10') ou opposé à celle-ci, le logement de jambe de suspension (4) venant en appui contre le palier de jambe de force (1), en particulier le dispositif d'ajustement (5).

3. Palier de jambe de suspension (1) selon la revendication 1 ou 2, **caractérisé en ce que** les dentures simples et/ou les dentures multiples sont chacune formées d'au moins un module de dents.

4. Palier de jambe de suspension (1) selon l'une des revendications précédentes, **caractérisé en ce que** les dentures simples et/ou les dentures multiples sont au moins partiellement conçues comme une denture hélicoïdale.

5. Palier de jambe de suspension (1) selon l'une des revendications précédentes, **caractérisé en ce que** la plaque de serrage (11) comporte au moins une échelle d'ajustement (12), l'échelle d'ajustement (12) étant disposée de telle sorte que l'échelle d'ajustement (12) soit en corrélation avec la position dans laquelle le logement de jambe de suspension (4) est disposé dans la direction transversale à l'axe longitudinal du véhicule, en particulier avec le carrossage.

6. Procédé de réglage et d'ajustement du carrossage de véhicules automobiles, le procédé comprenant les étapes suivantes :
a) fournir une jambe de suspension (2) pourvue d'une extrémité de jambe de suspension disposée sur le côté opposé à la roue,
b) fournir un palier de jambe de suspension (1) comprenant un logement de jambe de suspension (4) destiné à recevoir l'extrémité de jambe de suspension de la jambe de suspension (2) prévue à l'étape a), un dispositif d'ajustement (5) comprenant au moins un coulisseau (6) pourvu d'au moins un élément de guidage (7), un plaque d'appui (8) pourvue d'au moins un logement d'élément de guidage (9) formant un guidage linéaire de l'au moins un coulisseau (6) pourvu de l'au moins un élément de guidage (7) conjointement avec l'au moins un logement d'élément de guidage (9), le dispositif d'ajustement (5) comportant en outre une plaque de serrage (11), la plaque d'appui (8), l'au moins un coulisseau (6) et la plaque de serrage (11) étant disposés les uns par rapport aux autres de telle sorte que l'au moins un coulisseau (6) puisse être fixé au moins par serrage entre la plaque d'appui (8) et la plaque de serrage (11) et le logement de jambe de suspension (4) étant disposé au niveau de l'au moins un coulisseau (6) et le palier de jambe de suspension (1) comportant au moins un moyen de fixation (3, 3', 3''), le moyen de fixation (3, 3', 3'') permettant de former au moins une liaison par serrage amovible avec le palier de jambe de suspension (1) et la carrosserie de véhicule (10, 10'), en particulier une liaison par vissage, la liaison par serrage étant en outre formée entre le palier de jambe de suspension (1) et le dispositif d'ajustement (5), la liaison par serrage fixant au moins par serrage la position de l'au moins un coulisseau (6), le logement d'élément de guidage (9) du palier de jambe de suspension (1) fourni étant conçu comme un cadre de guidage dans une autre étape b1), le coulisseau (6) étant disposé à l'intérieur du cadre de guidage,
c) desserrer partiellement l'au moins un moyen de fixation (3, 3', 3'') du palier de jambe de suspension (1) fourni à l'étape b), l'au moins une liaison par serrage étant partiellement libérée et le palier de jambe de suspension (1) prévu à l'étape b) restant relié à la carrosserie de véhicule (10, 10'), l'au moins un coulisseau (6) du palier de jambe de suspension (1) fourni à l'étape b) pouvant coulisser dans le dispositif d'ajustement (5) du palier de jambe de suspension (1) fourni à l'étape b),
d) faire coulisser l'au moins un coulisseau (6), pouvant coulisser depuis l'étape c), dans le dispositif d'ajustement (5) dans la direction transversale à l'axe longitudinal du véhicule pour régler et/ou ajuster le carrossage de roue, avec la liaison de serrage partiellement libérée de l'étape c),
e) serrer l'au moins un moyen de fixation (3, 3', 3'') partiellement desserré à l'étape c), la liaison par serrage partiellement libérée de l'étape d) étant au moins partiellement restaurée, l'au moins un coulisseau (6) qui a coulissé à l'étape d) dans le dispositif d'ajustement (5) étant fixé au moins par serrage, la plaque d'appui (8) ou la plaque de serrage (11) et l'au moins un coulisseau (6) du palier de jambe de suspension (1) fourni à l'étape b) comportant en outre des dentures simples et/ou des dentures multiples qui peuvent être appariées les unes aux autres par complémentarité de formes, après le coulissement à l'étape d) un engrènement étant effectué dans une autre étape d1), au moins une liaison par complémentarité de formes étant en outre formée dans la direction transversale à l'axe longitudinal du véhicule.
